(19) Europäisches Patentamt / European Patent Office / Office européen des brevets

(11) **EP 2 440 001 B1**

(12) **FASCICULE DE BREVET EUROPEEN**

(45) Date de publication et mention
de la délivrance du brevet:
**13.05.2015 Bulletin 2015/20**

(51) Int Cl.:
***H04W 72/12*** *(2009.01)*

(21) Numéro de dépôt: **11306305.1**

(22) Date de dépôt: **07.10.2011**

(54) **Procédé et dispositif de transmission d'informations en contention sur des créneaux temporels entre des noeuds émetteurs-récepteurs d'un réseau ad hoc**

Verfahren und Vorrichtung zur Informationsübertragung im Konkurrenzbetrieb auf Zeitintervallen zwischen Sende-/Empfängerknoten eines Ad-hoc-Netzes

Method and device for transmitting information in contention on time slots between emitter-receiver nodes of an ad hoc network

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2010 FR 1003993**

(43) Date de publication de la demande:
**11.04.2012 Bulletin 2012/15**

(73) Titulaire: **Thales
92200 Neuilly Sur Seine (FR)**

(72) Inventeurs:
• **Fouillot, Pascale Marie Adeline
92704 COLOMBES (FR)**
• **Massin, Raphaël André Michel
92704 COLOMBES (FR)**

(74) Mandataire: **Blot, Philippe Robert Emile
Cabinet Lavoix
2, place d'Estienne d'Orves
75441 Paris Cedex 09 (FR)**

(56) Documents cités:
**EP-A1- 1 699 175          WO-A1-2006/010331
US-A1- 2004 218 577**

• **KOUBAA A ET AL: "Improving Quality-of-Service in Wireless Sensor Networks by Mitigating â Hidden-Node Collisionsâ", IEEE TRANSACTIONS ON INDUSTRIAL INFORMATICS, IEEE SERVICE CENTER, NEW YORK, NY, US, vol. 5, no. 3, 1 août 2009 (2009-08-01), pages 299-313, XP011271719, ISSN: 1551-3203, DOI: DOI:10.1109/TII.2009.2026643**

**EP 2 440 001 B1**

**Description**

La présente invention concerne un procédé de transmission d'informations dans un réseau ad hoc comprenant au moins deux noeuds émetteurs-récepteurs propres à recevoir et émettre des informations et communiquant entre eux par l'envoi d'informations dans des créneaux temporels en accès aléatoire organisés en trames.

Un réseau ad hoc est un réseau sans fil capable de s'organiser sans infrastructure définie préalablement. Il n'y a pas d'élément central ou point d'accès permettant de gérer les communications entre les différentes entités du réseau. Tout noeud d'un tel réseau est à la fois noeud terminal et noeud relais. Dans un tel réseau un noeud est considéré comme voisin d'un autre lorsqu'ils sont suffisamment proches pour qu'une communication soit possible. Deux noeuds trop éloignés pour qu'une communication soit possible entre les deux mais suffisamment proches pour que chacun génère des interférences destructrices sur l'autre, sont des noeuds interférents.

Un réseau ad hoc peut être constitué en utilisant la technologie WiFi décrite dans le document IEEE Std 802.11™- 2007, IEEE Standard for Information technology Télécommunications and information exchange between systems Local and metropolitan area networks - Part 11: Wireless LAN Médium Access Control (MAC) and Physical Layer (PHY) Spécifications, 2007. Un noeud de ce réseau désirant transmettre des informations à un noeud destinataire de ce même réseau diffuse d'abord à tous les noeuds voisins un message comprenant des données de signalisation indiquant l'identifiant du noeud destinataire. Il y a collision au niveau d'un noeud lorsqu'au moins deux messages sont reçus simultanément sur un même créneau temporel. S'il n'y a pas de collision avec un autre message, le noeud reçoit un message de confirmation du noeud destinataire et lui envoie alors les données utiles. Sinon il doit effectuer une retransmission des données de signalisation. La retransmission n'est faite qu'à l'issue d'un temps d'attente dont la durée est calculée grâce à un algorithme par exemple un algorithme de repli exponentiel. Cette durée s'exprime souvent en un multiple d'un certain quantum de temps, qui peut varier d'une unité à plusieurs dizaines voire plusieurs centaines. Ce mécanisme permet de limiter les collisions mais conduit à des temps d'attente longs entre deux essais de transmission des données de signalisation si les quanta de temps sont de durée par exemple de l'ordre de 5ms.

Le document « Improving Quality-of-Service in Wireless Sensor Networks by Mitigating 'Hidden-Node Collision' » Koubâa, IEEE 2009 divulgue un procédé de répartition des noeuds en réseau ad hoc dans des groupes, chaque groupe émettant dans une fenêtre temporelle.

Le but de l'invention est de proposer un mécanisme de réduction des collisions qui n'impose pas de délai important.

A cet effet, l'invention a pour objet un procédé selon la revendication 1.

L'invention a également pour objet un procédé selon les revendications dépendantes 2 à 11.

L'invention a également pour objet un réseau ad hoc selon la revendication 12.

Ces caractéristiques et avantages de l'invention apparaîtront à la lecture de la description qui va suivre, donnée uniquement à titre d'exemple, et faite en référence aux dessins annexés, sur lesquels :

- la figure 1 est une vue schématique d'un réseau ad hoc à un instant temporel donné ;
- la figure 2 est un organigramme de l'algorithme de réduction des collisions du procédé selon l'invention ;
- la figure 3 est un tableau montrant différentes situations lors de l'envoi de messages sur une même trame ;
- les figures 4, 5 et 6 sont des tableaux représentant des exemples de transmission de messages dans une trame ;
- les figures 7, 8, 9 et 10 sont des vues schématiques d'un exemple d'application de l'algorithme de réduction des collisions du procédé selon l'invention ;
- les figures 11, 12, 13, 14, 15, 16, 17, 18, et 19 sont des schémas représentant des exemples de mise en oeuvre de l'algorithme du procédé selon l'invention.

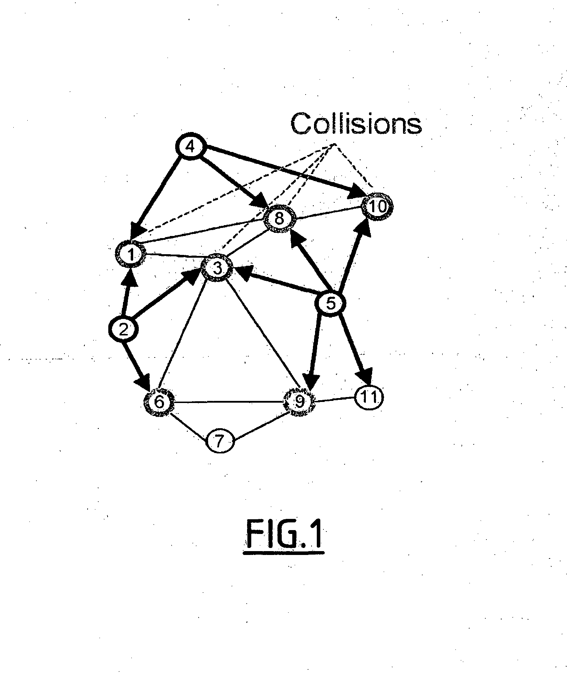

Le réseau illustré sur la figure 1 est par exemple un réseau ad hoc de communication entre des individus sur un terrain d'opérations. Dans cette figure les portées utiles des noeuds du réseau sont représentées par des traits pleins. Ce réseau ad hoc utilise des créneaux temporels d'accès aléatoires pour transmettre des messages. Ces créneaux temporels couramment désignés par slot en anglais sont répartis dans des trames avec un nombre de créneaux temporels dans chaque trame constant d'une trame à l'autre.

Ce réseau répond par exemple à la norme WiMax mobile 802.16m.

Chaque individu est équipé d'un émetteur-récepteur constituant un noeud du réseau. Chaque noeud comporte des moyens de communication pour recevoir des messages et en émettre sur des trames divisées en créneaux temporels. Un créneau temporel permet la transmission d'un message dont la taille est compatible avec la durée des créneaux temporels. Puis, à chaque trame, un message est transmis lors d'un créneau temporel. Le choix de ce créneau temporel se fait de manière aléatoire. Ce créneau temporel est utilisé pour une transmission en diffusion.

Le réseau représenté sur la figure 1 comporte onze noeuds, numérotés de 1 à 11, et montre quatre situations de collisions au niveau des noeuds 1, 3, 8 et 10. Au niveau du noeud 1, il y a collision entre les messages émis par les noeuds 2 et 4, au niveau du noeud 3, il y a collision entre les messages émis par les noeuds 2 et 5, au niveau du noeud 8, il y a collision entre les messages émis par les noeuds 4 et 5, et au niveau du noeud 10, il y a collision entre les messages émis par les noeuds 4 et 5.

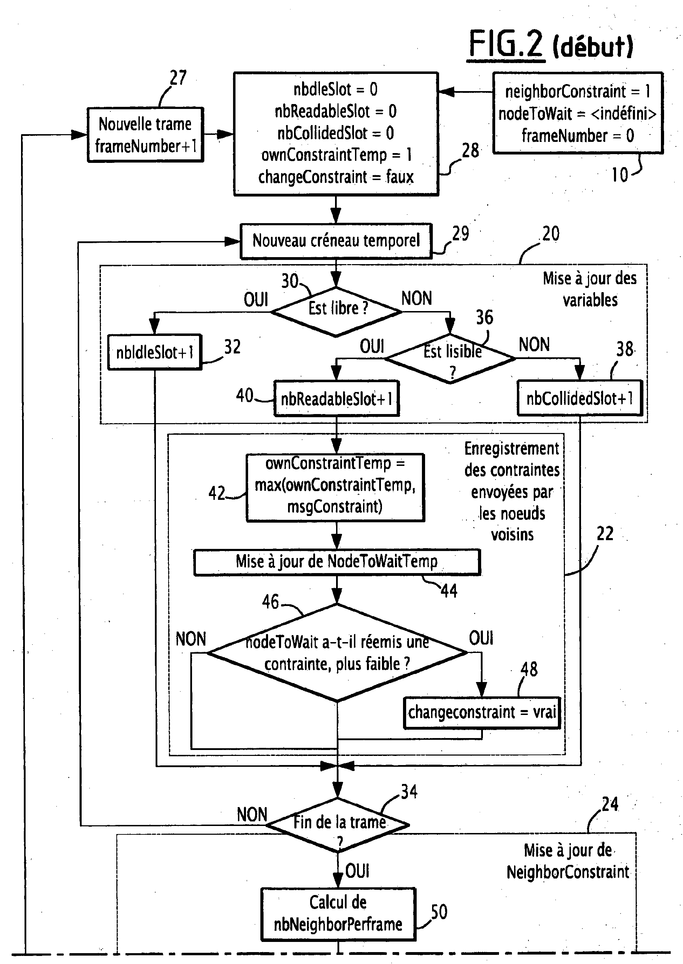

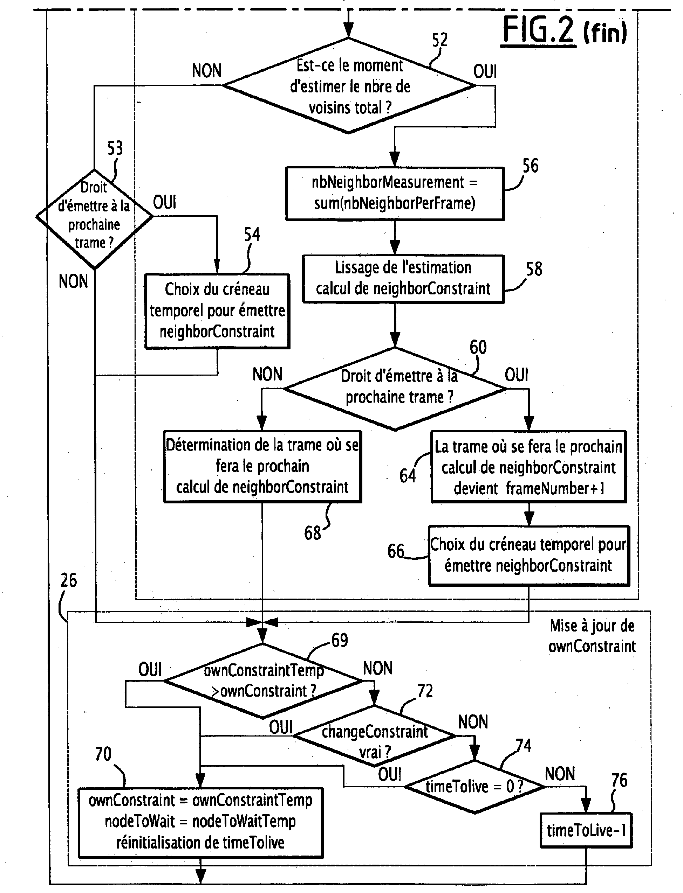

Chaque noeud est propre à mettre en oeuvre en continu l'algorithme de la figure 2. Cet algorithme est mis en oeuvre pour chaque nouvelle trame reçue par le noeud considéré.

Afin de permettre la mise en oeuvre de l'algorithme, en vue de réduire le nombre de collisions, les variables contenues dans deux champs suivants sont ajoutées à chaque message adressé dans un créneau temporel du message transmis par le noeud :

- *msgConstraint* qui représente une contrainte imposée par le noeud émetteur à chacun de ses noeuds voisins ; et
- *ownConstraint* qui représente la contrainte que le noeud émetteur s'impose en fonction des contraintes qui lui ont été imposées par les noeuds voisins.

Un noeud soumis à une contrainte *ownConstraint* a le droit d'émettre toutes les *ownConstraint* trames, et il doit renoncer à émettre dans les autres trames. L'algorithme assure donc la définition de la contrainte propre à chaque noeud, ce qui revient à répartir les noeuds en des groupes, chacun associé à des trames, seuls les noeuds du groupe associé à une trame donnée ayant le droit d'émettre dans cette trame. L'algorithme réduit ainsi les risques de collision.

Cette contrainte *ownConstraint* est déterminée par chaque noeud pour lui même en fonction des contraintes *msgConstraint* imposées par les noeuds voisins.

Ainsi, chaque noeud :

- Estime le nombre de voisins ou interférents émettant dans son voisinage en fonction du nombre de slots reçus correctement, en collision et libres ;
- Calcule la probabilité de collision dans son voisinage ;
- Calcule une contrainte à imposer à ses voisins pour atteindre une probabilité de collision seuil ;
- Se soumet lui-même aux contraintes imposées par ses voisins ;

Une phase d'initialisation 10 précède l'exécution de l'algorithme. Durant cette phase certaines variables d'état sont initialisées :

- *neighborConstraint* est un entier représentant la contrainte imposée par le noeud considéré à chacun de ses noeuds voisins, initialisée à la valeur 1,
- *nodeToWait* est l'identifiant du noeud émetteur de la contrainte à laquelle se soumet le noeud considéré, initialisée à la valeur « indéfini»,
- *frameNumber* est le numéro de la trame courante, initialisé à zéro.

Plus précisément, l'algorithme comporte quatre phases majeures 20, 22, 24 et 26 illustrées sur la figure 2 correspondant respectivement à une estimation du nombre de voisins et interférents émettant dans une trame lors de la phase 20, un enregistrement des contraintes envoyées par les voisins au cours d'une trame, lors de la phase 22, une mise à jour, sous certaines conditions, de la contrainte à imposer à ses voisins, lors de la phase 24 et une mise à jour, sous certaines conditions, de la contrainte à laquelle le noeud se soumet au cours d'une trame lors de la phase 26.

Les deux premières phases 20, 22 s'effectuent à chaque nouveau créneau temporel tandis que les deux dernières phases 24, 26 s'effectuent à chaque fin de trame.

La phase 20 consiste en une mise à jour des variables contenant le nombre de créneaux libres, lisibles et en collision du noeud considéré dès qu'il reçoit les informations d'un nouveau créneau temporel. Ces variables lui permettront par la suite d'estimer le nombre de noeuds ayant émis dans son voisinage en fin de trame.

La phase 22 n'est réalisée que si le créneau temporel en cours est lisible. Elle consiste en un enregistrement des contraintes envoyées par le noeud émetteur voisin du noeud considéré.

La phase 24 consiste en un calcul du nombre total de noeuds émetteurs, voisins ou interférents du noeud considéré, à partir des variables mises à jour lors de la phase 20 et sous certaines conditions, une détermination de la règle de répartition à imposer aux noeuds voisins du noeud considéré, compte tenu du nombre de noeuds émetteurs, voisins ou interférents estimés.

Enfin, la phase 26 consiste en une mise à jour de la règle de répartition à laquelle le noeud considéré doit se soumettre.

Le même algorithme est mis en oeuvre en permanence par chaque noeud du réseau.

On considère, ici l'application de l'algorithme de la figure 2 pour un noeud d'un réseau ad hoc.

Cet algorithme est mis en oeuvre pour chaque nouvelle trame dont la réception commence à l'étape 27 au cours de laquelle la variable *frameNumber* est incrémentée de 1.

Les variables utilisées par l'algorithme sont d'abord initialisées pour chaque nouvelle trame lors d'une étape 28, sous la forme :

*nbReadableSlot* = 0, *nbCollidedSlot* = 0 et *nbIdleSlot* = 0, *ownConstraintTemp* = 1 et *changeConstraint* = « faux » pour le noeud considéré, ces variables répondant au définitions suivantes :

- *nbReadableSlot* est le nombre de créneaux temporels lisibles dans une trame. Un créneau temporel est lisible si un message a été reçu, c'est-à-dire si exactement un noeud voisin du noeud considéré a tenté d'accéder au créneau temporel.
- *nbCollidedSlot* est le nombre de créneaux temporels au cours d'une trame dans lesquels ont eu lieu des collisions. Un créneau temporel est en collision si au moins deux noeuds voisins ou interférents du noeud considéré ont envoyé un message sur ce créneau.
- *nbIdleSlot* est le nombre de créneaux temporels libres dans une trame. Un créneau temporel est libre si aucun noeud voisin ou interférent n'a envoyé de message sur ce créneau.
- *ownConstraintTemp* est la contrainte la plus élevée reçue des noeuds voisins du noeud considéré au cours de la trame en cours de réception. Une règle de répartition impose aux noeuds qui s'y soumettent à n'émettre qu'une fois toutes les q trames, q étant appelée la contrainte. *ownConstraint* est la contrainte q à laquelle le noeud considéré se soumet à un instant donné, laquelle peut être différente de *ownConstraintTemp,* et
- *changeConstraint* est un booléen prenant la valeur «vrai » si la contrainte *ownConstraint* doit être mise à jour.

Les phases 20 et 22 sont mises en oeuvre pour chaque nouveau créneau temporel de la trame reçu à l'étape 29.

La phase 20 débute à la réception du message contenu dans le nouveau créneau temporel par une première étape 30 consistant à déterminer si ce créneau temporel est libre ou pas.

Si le créneau est libre, la variable *nbIdleSlot* est incrémentée d'une unité au cours d'une étape 32 et on passe directement à la fin de la phase 22, où il est déterminé lors d'une étape 34 si la trame déterminée à l'étape 27 est terminée ou pas. Si elle n'est pas terminée, le noeud considéré doit traiter les informations contenues dans un nouveau créneau temporel détecté à l'étape 29. Sinon la phase 24 est mise en oeuvre.

Si le créneau n'est pas libre lors du test de l'étape 30, on détermine dans une étape 36 si le créneau est lisible ou pas.

Si le créneau n'est pas lisible la variable *nbCollidedSlot* est incrémentée d'une unité au cours d'une étape 38 et on passe directement à l'étape 34 à la fin de la phase 22.

Si le créneau est lisible la variable *nbReadableSlot* est incrémentée d'une unité au cours d'une étape 40 et on passe ensuite à la phase 22.

La phase 22 n'est donc réalisée que si le créneau temporel en cours est lisible.

Cette phase débute par une étape 42 au cours de laquelle le noeud compare la contrainte reçue, représentée par la variable *msgConstraint,* avec la variable *ownConstraintTemp* qui est la contrainte la plus élevée reçue des noeuds voisins du noeud considéré au cours de la trame en cours de réception. La contrainte la plus élevée entre la contrainte reçue *msgConstraint* et la variable *ownConstraintTemp,* jusque là la plus élevée, est enregistrée dans la variable *own-ConstraintTemp.*

A l'étape 44 suivante, l'identifiant du noeud émetteur de cette contrainte la plus élevée est enregistré dans une variable *nodeToWaitTemp.*

L'étape 46 consiste à vérifier si le noeud *nodeToWait* ayant transmis au cours des trames précédentes la contrainte *msgConstraint* auquel le noeud considéré se soumet a réémis une contrainte plus faible. Si ce n'est pas le cas, on passe à l'étape 34, sinon la variable *changeConstraint* prend la valeur « vrai » au cours d'une étape 48 et on passe ensuite à l'étape 34.

La phase 24 débute par une étape 50 de calcul du nombre de noeuds voisins ou interférents ayant émis dans la trame qui vient d'être reçue, ce nombre est mémorisé dans un tableau *nbNeighborPerFrame* indexé par le numéro de la trame courante modulo *neighborConstraint* Par la suite, pour alléger la notation l'index est omis. Pour effectuer le calcul, on utilise la relation :

$$nbNeighborPerFrame = nbReadableSlot + k \cdot nbCollidedSlot \text{ avec } k \geq 2 \qquad (1)$$

Le coefficient k est tout d'abord fixé à l'initialisation du réseau en fonction du nombre moyen de noeuds voisins ou interférents par noeud et du nombre de créneaux temporels dans une trame. Ensuite sa valeur peut être changée dynamiquement pour mieux refléter la topologie locale du réseau autour du noeud considéré.

Les exemples qui suivent illustrent le choix du coefficient k.

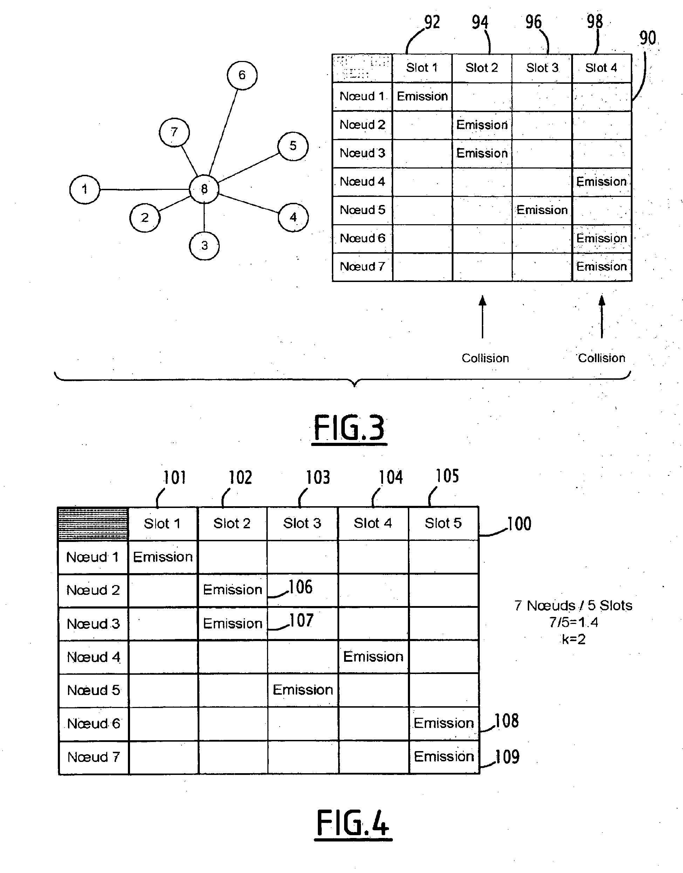

Sur la figure 3, un réseau ad hoc est composé de huit noeuds numérotés de 1 à 8. Un noeud 8 est à l'écoute des messages envoyés par des noeuds dans son voisinage et cherche à estimer son nombre de noeuds émetteurs, voisins ou interférents. Un tableau 90 représente une trame divisée en quatre créneaux temporels 92, 94, 96 et 98, pendant lesquels les noeuds numérotés de 1 à 7 émettent des messages. En analysant les messages reçus sur cette trame, le noeud huit détecte une collision pendant les créneaux temporels 94 et 98 ; les deux créneaux temporels 92 et 96 sont quant à eux lisibles. Une estimation du nombre de noeuds voisins ou interférents ayant émis dans la trame consiste à appliquer la relation (1). Dans l'exemple de la figure 3, les variables *nbReadableSlot* et *nbCollidedSlot* valent deux. En choisissant k=2, le noeud 8 estime avoir six voisins.

Sur la figure 4, une trame 100 est divisée en cinq créneaux temporels 101, 102, 103, 104 et 105. Sept noeuds, numérotés de 1 à 7, émettent des messages dans cette trame. Le rapport entre le nombre de noeuds et le nombre de créneaux temporels vaut alors 1.4. On calcule un k idéal égal au nombre de messages en collisions divisé par le nombre de créneaux temporels sur lesquels se produisent les collisions. Sur la figure 4, il y a quatre messages 106, 107, 108 et 109 qui entrent en collision, ces collisions se produisant au cours des deux créneaux temporels 102 et 105. Le k idéal prend comme valeur 2.

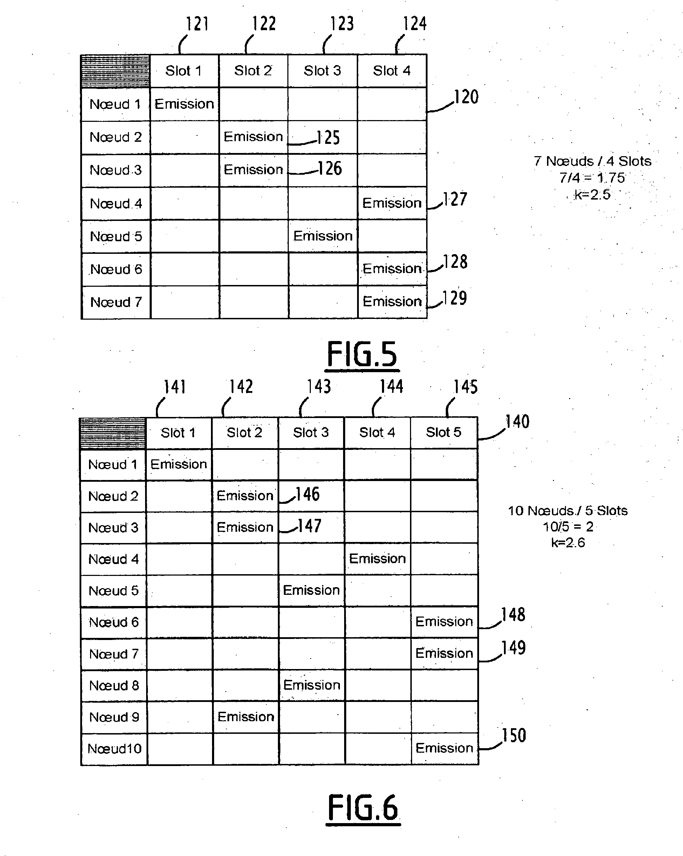

Sur la figure 5, une trame 120 est divisée en quatre créneaux temporels 121, 122, 123 et 124. Sept noeuds, numérotés de 1 à 7, émettent des messages dans cette trame. Le rapport entre le nombre de noeuds et le nombre de créneaux temporels vaut alors 1.75. Sur la figure 5, il y a cinq messages 125, 126, 127, 128 et 129 qui entrent en collision, ces collisions se produisant au cours des deux créneaux temporels 122 et 124. Le k idéal prend comme valeur 2.5.

Sur la figure 6, une trame 140 est divisée en cinq créneaux temporels 141, 142, 143, 144 et 145. Dix noeuds, numérotés de 1 à 10, émettent des messages dans cette trame. Le rapport entre le nombre de noeuds et le nombre de créneaux temporels vaut alors 2. Sur la figure 6, il y a cinq messages 146, 147, 148, 149 et 150 qui entrent en collision, ces collisions se produisant au cours des deux créneaux temporels 142 et 145. Le k idéal prend comme valeur 2.6.

Les figures 4, 5 et 6 mettent en évidence le fait que plus le rapport entre le nombre de noeuds et le nombre de créneaux temporels dans une trame est élevé, plus le facteur k idéal est grand.

Lors du début de la phase 24, le noeud considéré impose pour le moment aux noeuds voisins une règle de répartition dont la valeur de la contrainte est mémorisée dans une variable *neighborConstraint*.

L'estimation du nombre total de noeuds émetteurs, voisins ou interférents du noeud considéré qui permet ensuite de déterminer la nouvelle contrainte à imposer aux noeuds voisins se fait sur les dernières Q = *neighborConstraint* trames, en additionnant les voisinages estimés dans chacune des Q trames.

A cet effet, lors d'une étape 52, le noeud détermine s'il s'agit de la dernière estimation avant de pouvoir estimer le nombre total de noeuds émetteurs, voisins ou interférents et de calculer la nouvelle contrainte à imposer aux noeuds voisins.

S'il ne s'agit pas de la dernière estimation et si le noeud a le droit d'émettre à la prochaine trame, ce qui est vérifié lors d'une étape 53, le noeud considéré choisit de manière aléatoire, à l'étape 54, un créneau temporel pour émettre dans la prochaine trame les informations utiles ainsi que les contraintes *msgConstraint,* qui prend la valeur de *neighborConstraint* et *ownConstraint.* Lors de l'étape 53 le noeud détermine s'il a le droit d'émettre en vérifiant s'il appartient au groupe qui a ce droit, les différents noeuds du réseau se distribuant en groupes selon une règle de répartition. Par exemple, un noeud soumis à une contrainte *ownConstraint* a le droit d'émettre une contrainte pour son voisinage dans la trame suivante si et seulement si son adresse MAC modulo *ownConstraint* est égale au numéro de la trame suivante modulo *ownConstraint,* c'est-à-dire mod( @ *MAC,ownConstraint*) = *mod*(*frameNumber,ownConstraint*).

S'il ne s'agit pas de la dernière estimation et que le noeud considéré n'a pas le droit d'émettre, on passe directement à la fin de la phase 24.

S'il s'agit de la dernière estimation, dans une étape 56 on mémorise dans une variable *nbNeighborMeasurement* la somme des nombres de noeuds émetteurs, voisins ou interférents estimés dans chacune des Q trames c'est-à-dire la somme des *nbNeighborPerFrame.* Dans une étape suivante 58, on effectue un lissage de l'estimation du nombre total de noeuds voisins *nbNeighborEstim* en pondérant la valeur estimée à la trame actuelle par celle estimée à la précédente suivant la relation :

$$nbNeighborEstim = \alpha * nbNeighborEstim + (1-\alpha) * nbNeighborMeasurement \quad (2)$$

où *nbNeighborEstim* est une variable initialisée au début de l'exécution de l'algorithme à zéro ou à une autre valeur si le nombre de voisins total dans le réseau ad hoc est connu au départ, et $\alpha$ un coefficient de pondération par exemple égal à 0,8.

Le lissage de l'estimation du voisinage permet d'éviter des changements de contrainte à chaque erreur.

Lors de cette même étape 58, le noeud calcule la nouvelle contrainte *neighborConstraint* à imposer aux noeuds voisins.

La valeur de la contrainte *neighborConstraint* à imposer aux noeuds voisins en fonction du voisinage estimé s'établit comme suit.

Soit n le nombre de créneaux temporels dans une trame. Soit N le nombre de noeuds émetteurs dans le voisinage à un bond du noeud à l'écoute (voisins plus interférents).

Dans l'exemple proposé, l'hypothèse est que tous les noeuds du voisinage du noeud à l'écoute doivent transmettre un message à chaque trame. La probabilité que le noeud à l'écoute reçoive, sans qu'il y ait de collision, le message d'un de ses voisins au cours d'une trame s'écrit :

$$\overline{p_{collision}}(S) = \left(1 - \frac{1}{n}\right)^{N-1} \qquad (3).$$

On fixe une probabilité $P_{Seuil}$ par exemple égale à 0,8 correspondant à la probabilité minimale que les voisins du noeud à l'écoute ont de se faire entendre par ce noeud à l'écoute.

Le nombre maximal de voisins et interférents émettant sur une même trame et pouvant entourer le noeud à l'écoute afin de ne pas dépasser $P_{Seuil}$ est donné par la relation :

$$M = 1 + \frac{\ln(p_{seuil})}{\ln\left(1 - \frac{1}{n}\right)} \qquad (4)$$

Dans le cas où le nombre de noeuds voisins et interférents , noté P, estimé par le noeud à l'écoute est supérieur à M, alors les noeuds voisins doivent se diviser en Q groupes émettant une fois toutes les Q trames, avec :

$$Q = \lfloor P/M \rfloor + 1 \qquad (5)$$

avec $\lfloor x \rfloor$ qui représente la partie entière de x.

La valeur de P est égale à *nbNeighborMeasurement.*

Q est appelée la contrainte et la valeur de *neighborConstraint* est prise égale à Q.

Le $q^{ième}$ groupe (avec $1 < q < Q$ ) est formé des noeuds voisins dont les adresses MAC modulo Q sont égales à q-1 et émettent à chaque trame dont le numéro modulo Q est égal à q-1. L'estimation du nombre de noeuds voisins et interférents doit ainsi se faire toutes les Q trames, en additionnant les voisinages estimés durant chacune des Q trames.

Dans le cas où le nombre de noeuds voisins et interférents estimé par le noeud à l'écoute est inférieur à M, alors les noeuds voisins peuvent continuer à émettre à chaque trame. On fixe alors $Q=1$.

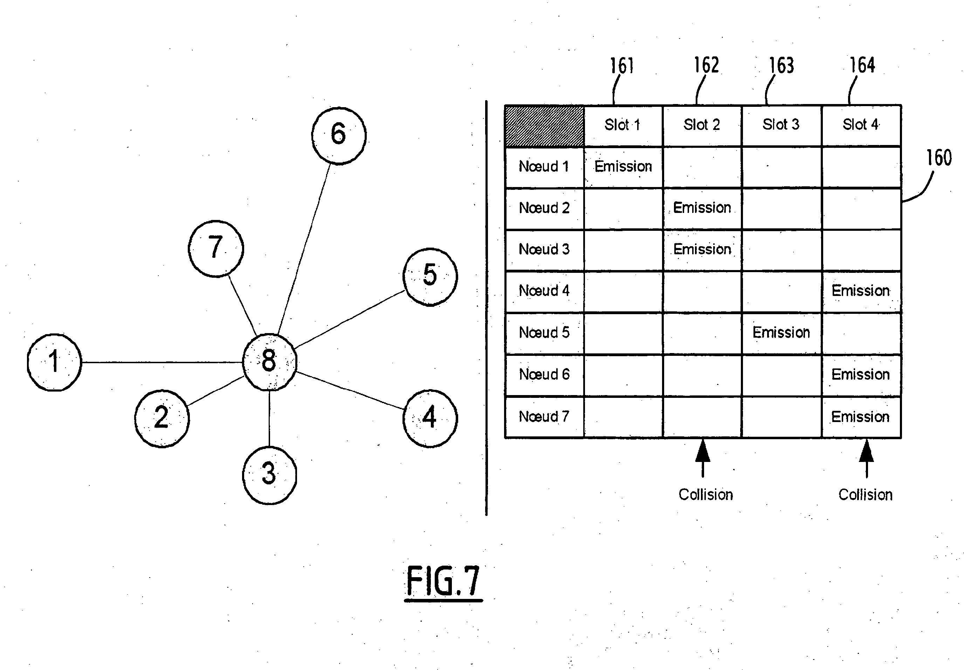

Sur la figure 7, un réseau ad hoc est composé de huit noeuds numérotés de 1 à 8. Un noeud 8 est à l'écoute des messages envoyés par des noeuds dans son voisinage ou par des interférents. Sur cette figure, une trame 160 est divisée en quatre créneaux temporels 161, 162, 163 et 164. On fixe k=2 et $p_{Seuil}$ = 0,70 . En appliquant la formule de l'équation (4), on obtient M=2,23. Le noeud 8 ne connaissant pas le nombre de noeuds voisins qui l'entourent, impose la contrainte Q=1 à ses noeuds voisins. Ces derniers, étant 7, ont donc une probabilité d'identification de 0,18, d'après l'équation (3). On suppose que les noeuds voisins du noeud 8 ont émis des messages tels que représentés sur le tableau 160. En appliquant la formule de l'équation (1), sachant qu'il y a deux créneaux temporels lisibles, deux créneaux temporels en collision et que k=2, le noeud 8 estime six voisins.

Le noeud 8 calcule la contrainte à envoyer à ses voisins d'après l'équation (5), qui vaut Q=3. En supposant que le numéro de la première trame au cours de laquelle les noeuds doivent se soumettre à la contrainte imposée par le noeud 8 est 1, les noeuds 1, 4 et 7 pourront émettre pendant la trame 1, les noeuds 2 et 5 émettront pendant la seconde trame et les noeuds 3 et 6 émettront au cours de la troisième trame.

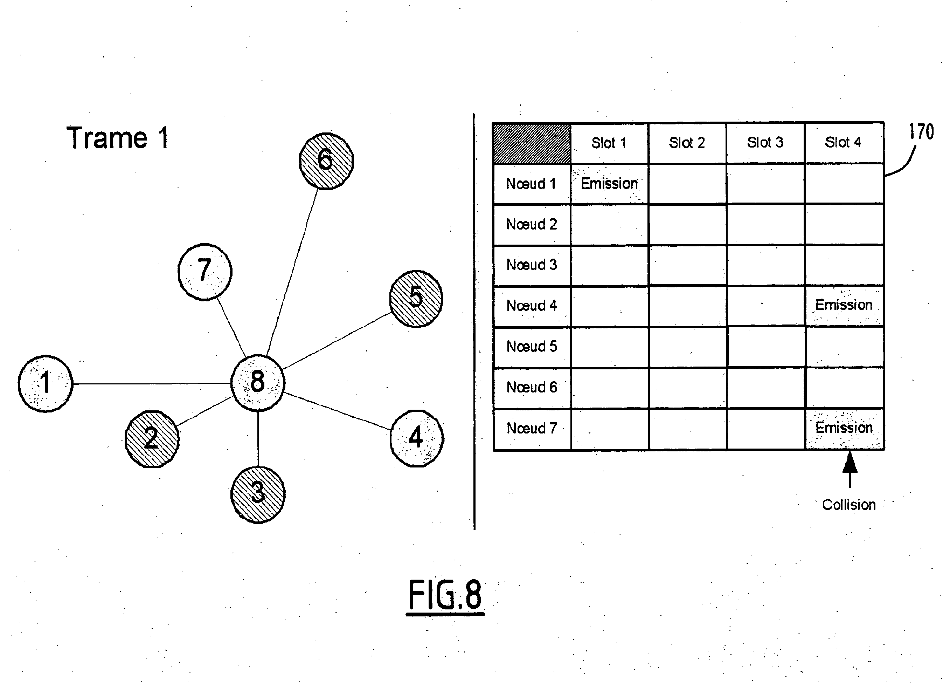

Sur la figure 8, seuls les noeuds 1, 4 et 7 émettent pendant la trame 1, représentée par le tableau 170. La probabilité qu'il n'y ait aucune collision est alors de 0,56, d'après l'équation (3).

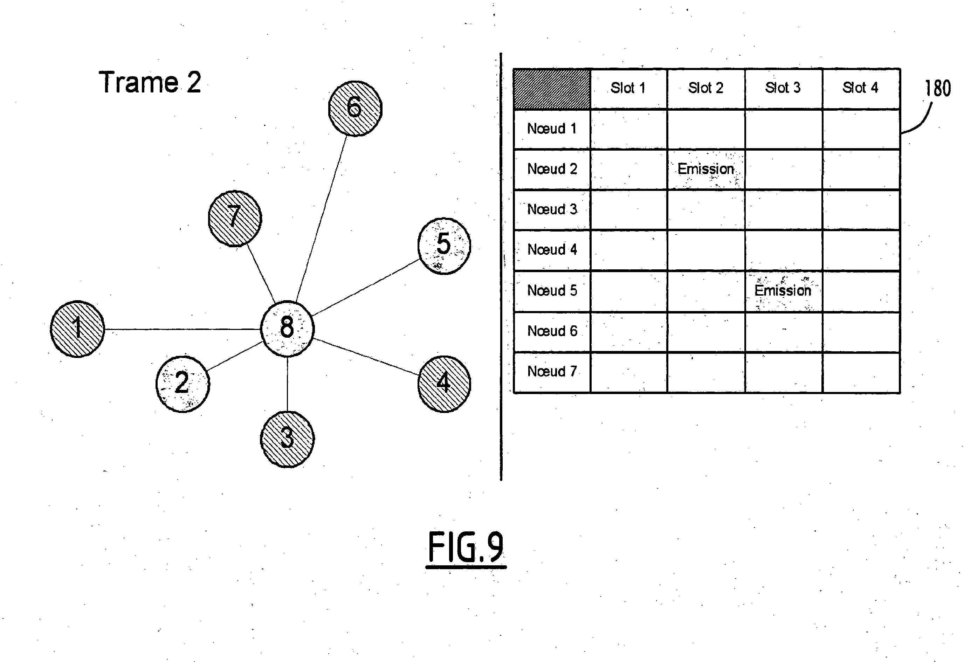

Sur la figure 9, seuls les noeuds 2 et 5 émettent pendant la trame 2, représentée par le tableau 180. La probabilité qu'il n'y ait aucune collision est alors de 0,75, d'après l'équation (3).

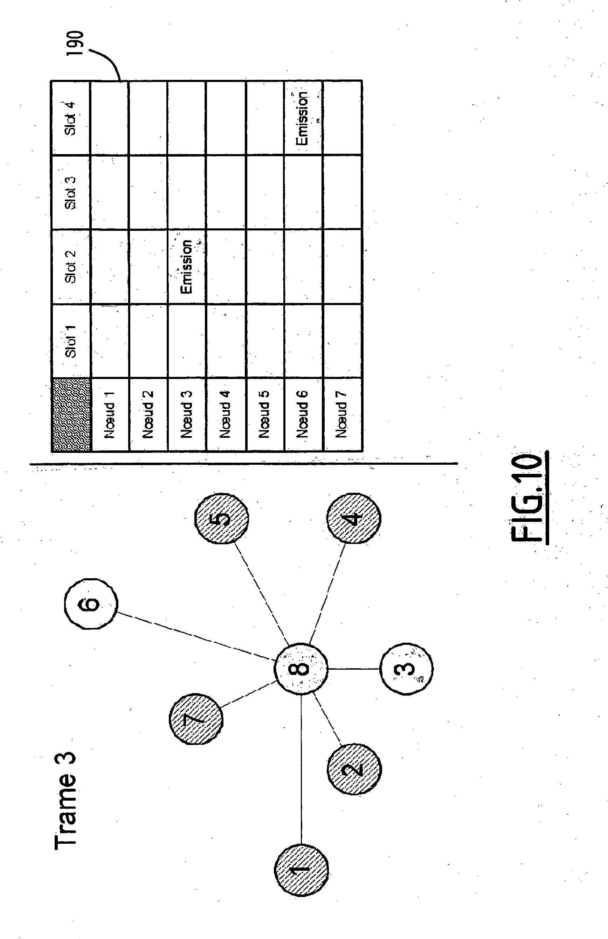

Sur la figure 10, seuls les noeuds 3 et 6 émettent pendant la trame 3, représentée par le tableau 190. La probabilité qu'il n'y ait aucune collision est alors de 0,75, d'après l'équation (3). La contrainte imposée par le noeud 8 étant égale à 3, la prochaine estimation du nombre de voisins se fait à la fin de la trame 3 où il estime :

$$nbNeighbourMeasurement = \underbrace{1 + k * 1}_{Trame1} + \underbrace{2 + k * 0}_{Trame2} + \underbrace{2 + k * 0}_{Trame3} = 7$$ voisins. La nouvelle contrainte neighborConstraint à envoyer aux noeuds voisins se calcule grâce à l'équation (5), elle vaut Q=4. L'algorithme se poursuit ensuite avec cette nouvelle contrainte.

Dans une étape 60, le noeud détermine si il a le droit d'émettre la nouvelle contrainte dans la trame suivante suivant le même traitement que l'étape 53.

Si le noeud considéré a le droit d'émettre dans la trame suivante, on passe à une étape 64, qui consiste à calculer le numéro de la trame à la fin de laquelle le noeud considéré doit déterminer la prochaine contrainte *neighbor-Constraint* qu'il imposera à ses voisins : c'est la trame suivante (*frameNumber + 1).*

Dans une étape 66 le noeud considéré choisit de manière aléatoire un créneau temporel pour émettre dans la prochaine trame les informations utiles ainsi que les nouvelles contraintes *msgConstraint* (qui prend la valeur de *neighborConstraint*) et *ownConstraint.*

Si le noeud considéré n'a pas le droit d'émettre dans la trame suivante, dans une étape 68, le noeud considéré calcule le numéro de la trame à la fin de laquelle il doit déterminer la prochaine contrainte *neighborConstraint* qu'il imposera à ses voisins. Il y a deux cas : (1) si la contrainte vient d'être transmise alors le prochain calcul de *neighbor-Constraint* se fera Q trames plus tard : *frameNumber + Q ;* (2) sinon le prochain calcul de *neighborConstraint* se fera à la trame suivante : *frameNumber + 1.*

La phase 24 s'achève ainsi par l'étape 66 ou 68.

Dans la phase 26 la contrainte à laquelle le noeud considéré doit se soumettre est déterminée. Le mécanisme de mise à jour de *ownConstraintTemp* décrit en étape 42 assure l'application du principe de base selon lequel un noeud recevant plusieurs contraintes de ses voisins se soumet à la plus forte, ce qui revient à retenir la plus faible fréquence d'émission.

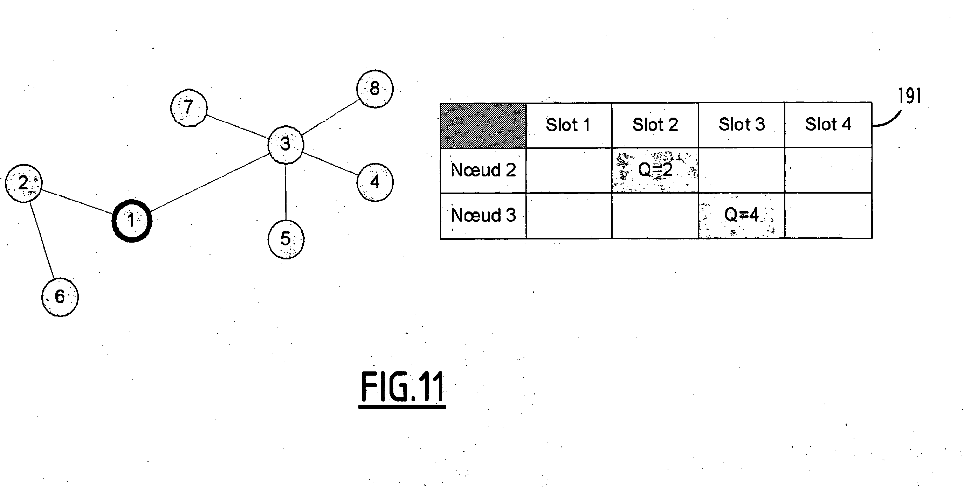

Sur la figure 11, un réseau ad hoc est composé de huit noeuds numérotés de 1 à 8. On suppose que les noeuds voisins 2 et 3 du noeud 1 ont émis des contraintes au cours d'une trame telle que représentée sur le tableau 191. Selon ce principe de base, le noeud 1 se soumettra à la contrainte émise par le noeud 3, c'est-à-dire Q=4.

Le voisin du noeud considéré envoyant la contrainte la plus forte peut lui-même être soumis à une contrainte par un de ses voisins. Il ne pourra donc pas envoyer sa contrainte à chaque trame. Les noeuds se soumettant à sa contrainte ne doivent pas pour autant se soumettre à des contraintes plus faibles lorsqu'ils ne reçoivent pas sa contrainte.

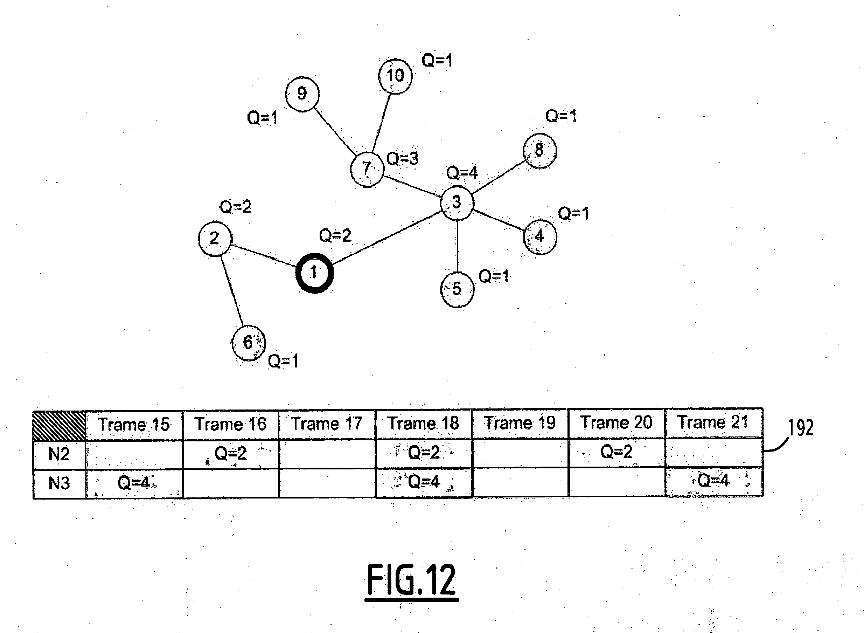

Sur la figure 12, un réseau ad hoc est composé de dix noeuds numérotés de 1 à 10, avec pour chaque noeud les contraintes imposées aux voisins. Un tableau 192 représente les contraintes reçues par le noeud 1 au cours de sept trames consécutives, numérotées de 15 à 21. Dans cet exemple, le noeud 3 envoie la contrainte Q=4 au cours de la trame 15. Etant lui-même soumis à la contrainte q=3, il ne pourra émettre qu'aux trames 18 et 21. D'après le principe de base, au cours des trames 16 à 21 le noeud 1 doit se soumettre à la contrainte q=4. Si ce principe de base n'est pas respecté, le nombre de voisins sera surestimé par le noeud 3, émetteur de la contrainte maximale, et l'algorithme divergera avec une estimation du nombre de voisins infinie.

La phase 26 débute donc par une étape 69 au cours de laquelle le noeud considéré détermine si *ownConstraintemp* est supérieure à la contrainte à laquelle il est soumis *ownConstraint.*

Si c'est le cas, on passe à une étape 70, au cours de laquelle le noeud détermine sa propre contrainte en affectant la valeur *ownConstraintTemp* à la variable *ownConstraint* et la valeur *nodeToWaitTemp* à la variable *nodeTo-Wait.* Simultanément, on réinitialise le compteur *timeToLive* à une certaine valeur, par exemple le double de la contrainte à laquelle le noeud considéré est soumis. Ce compteur permet de définir si un noeud n'a pas émis depuis longtemps.

Si, à l'étape 69, la variable *ownConstraintemp* n'est pas supérieure à la contrainte à laquelle il est soumis *ownConstraint,* on compare la variable *changeConstraint* à « vrai » au cours d'une étape 72.

Si elle est égale à « vraie », c'est le cas où le noeud émetteur de la contrainte à laquelle se soumet actuellement le noeud considéré a émis une contrainte plus faible, on passe à l'étape 70. Sinon on passe à une étape 74 au cours de la quelle la valeur de *timeToLive est examinée.* Si *timeToLive* atteint la valeur 0, alors on considère que le noeud n'est probablement plus dans le voisinage du noeud considéré. Dans l'étape 74 on teste si le compteur *timeToLive* du noeud qui a émis la contrainte à laquelle le noeud considéré est soumis est nul ou pas. Si *timeToLive* vaut zéro alors on passe à l'étape 70, sinon on passe à une étape 76 au cours de laquelle on décrémente le compteur *TimeToLive* d'une unité.

Les étapes 69, 72 et 74 évitent la divergence de l'algorithme en imposant au noeud considéré de se soumettre à la contrainte maximale qu'il a reçue au cours d'une trame si et seulement si cette contrainte maximale est supérieure à la contrainte à laquelle il est soumis ou le noeud auquel il se soumet à réémis une contrainte plus faible ou le noeud auquel il se soumet n'est probablement plus dans son voisinage.

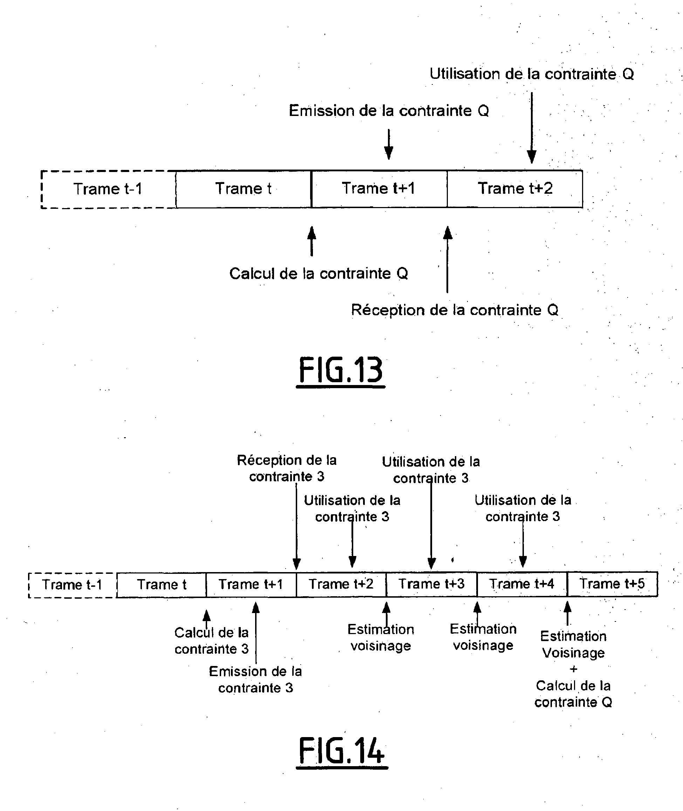

Sur les figures 13 à 15 sont explicités les décalages temporels entre la transmission et l'application des contraintes respectivement par un noeud émetteur et par des noeuds récepteurs.

Sur la figure 13, un noeud calcule à la fin d'une trame t la contrainte Q à imposer à son voisinage. En supposant que la contrainte q à laquelle le noeud considéré se soumet le permet, il transmet la contrainte Q aux noeuds voisins dans la trame suivante t+1. Les noeuds voisins recevant cette contrainte s'y soumettront à partir de la trame t+2.

Sur la figure 14, un noeud calcule à la fin d'une trame t la contrainte Q à imposer à son voisinage. Dans l'exemple de la figure 14, la contrainte vaut trois. En supposant que la contrainte q à laquelle le noeud considéré se soumet le permet, ce dernier émet la contrainte à la trame t+1, les noeuds voisins s'y soumettent à la trame t+2. Le noeud considéré débute ses estimations du voisinage à partir de la fin de la trame t+2. Le prochain calcul de la contrainte s'effectue à la fin de la trame t+2+Q-1, soit à la fin de la trame t+4 dans l'exemple de la figure 14, à partir des estimations du voisinage effectuées sur les trames t+2, t+3, ...., t+2+Q-1, soit sur les trames t+2, t+3 et t+4 dans l'exemple de la figure 14.

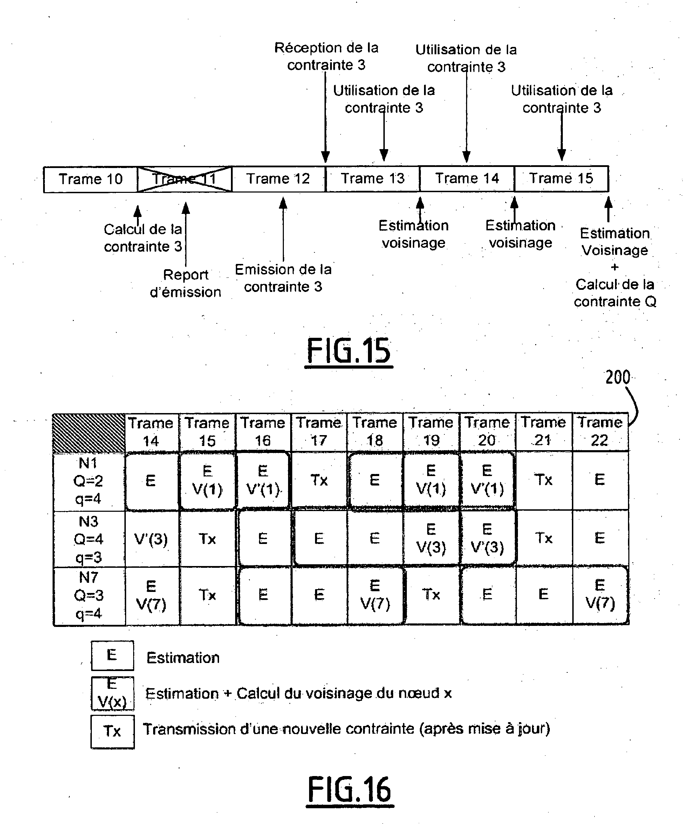

Sur la figure 15, un noeud 2 calcule à la fin d'une trame 10 la contrainte Q à imposer à son voisinage. Dans l'exemple de la figure 15, la contrainte vaut trois. Le noeud considéré est soumis à une contrainte, qui dans cet exemple l'empêche d'émettre la contrainte à la trame suivante 11. Il y a un report d'émission de la contrainte à imposer aux noeuds voisins. Soit v la trame à laquelle le noeud à l'écoute a le droit d'émettre la contrainte précédemment calculée. Alors le noeud à l'écoute doit reporter son prochain calcul de contrainte à la trame v+Q à partir des estimations réalisées à la fin des trames v+1, v+2, ..., v+Q. Dans l'exemple de la figure 15, v a comme valeur 12, le noeud à l'écoute réalise le calcul de la nouvelle contrainte à la fin de la trame 15, à partir des estimations réalisées à la fin des trames 13, 14 et 15. Dans cet exemple d'application de l'algorithme, aucune estimation du voisinage n'est réalisée à la fin de la trame de transmission de la contrainte, soit à la fin de la trame 12, et à la fin de la trame de report d'émission de la contrainte, soit à la fin de la trame 11.

Sur la figure 16, un tableau 200 représente une succession de trames numérotées de 14 à 22, et trois noeuds N1, N3 et N7. Le noeud N1 impose à ses voisins une contrainte Q=2 et est lui-même soumis à une contrainte q=4. Le noeud N3 impose à ses voisins une contrainte Q=4 et est lui-même soumis à une contrainte q=3. Le noeud N7 impose à ses voisins une contrainte Q=3 et est lui-même soumis à une contrainte q=4. Cet exemple illustre la manière dont l'algorithme du procédé tire partie des slots de report de transmission pour estimer son voisinage et calculer la contrainte. Suite à un report de transmission, la contrainte Q calculée par un noeud appelé S n'est pas envoyée à ses voisins. Les voisins de S continuent donc à utiliser la même contrainte que précédemment. Les noeuds transmettant un message au cours d'une trame de report de transmission T sont, sauf erreur par exemple due à une collision, les mêmes que ceux transmettant à la trame T-Q. L'algorithme du procédé utilise l'estimation du nombre de noeuds voisins et interférents transmettant au cours de la trame T pour recalculer le voisinage du noeud S. Les différents calculs de voisinage sont pondérés suivant la relation (2). Dans l'exemple de la figure 16, le noeud N1 calcule à la fin de la trame 15 son voisinage total V(1) Le noeud N1 doit attendre la trame 17 pour pouvoir transmettre la nouvelle contrainte. En fin de trame 16, dite trame de report de transmission, un second calcul du voisinage V'(1) a lieu, sur la base des estimations effectuées en trame 15 et 16 et de V(1). V'(1) est utilisé pour le calcul de la nouvelle contrainte à transmettre en trame 17.

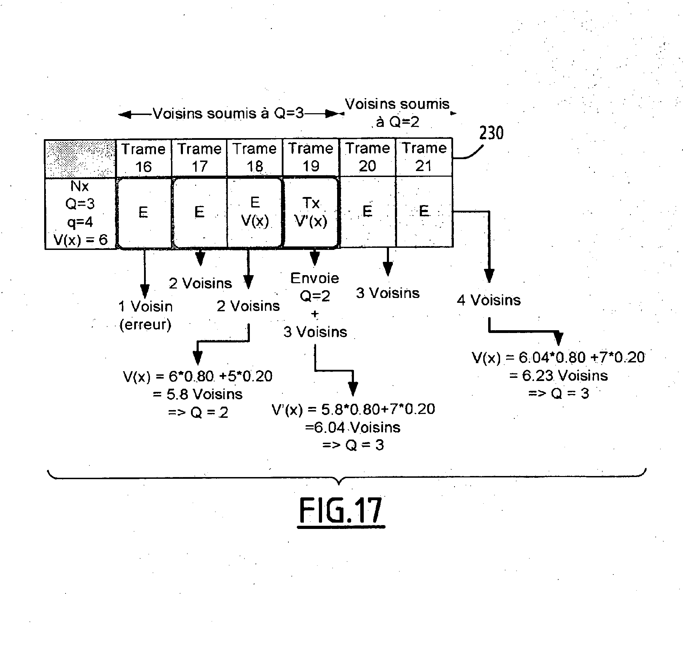

La figure 17 illustre un des bénéfices du lissage de l'estimation du nombre de voisins et interférents au cours des slots de transmission. Dans cette figure, un tableau 230 représente une succession de six trames numérotées de 16 à 21, et un noeud Nx tel que mod(x,4)=mod(15,4). Le noeud Nx impose une contrainte Q=3 à ses voisins et est lui-même soumis à une contrainte q=4. On suppose qu'au cours de la trame 16 il commet une erreur en estimant avoir un voisin au lieu de trois, qu'au cours de la trame 17 il estime avoir deux voisins, et qu'au cours de la trame 18 il estime avoir deux voisins. On suppose qu'il ne commet pas d'erreur dans les estimations du nombre de voisins ayant émis dans les trames 17 et 18. A la fin de la trame 18 il estime son nombre de voisins total à cinq au lieu de sept, ce qui le conduit à imposer une contrainte Q=2 au lieu de Q=3 à ses voisins en trame 19, dite trame de transmission. Dans l'exemple de la figure 17, le lissage de l'estimation est implémenté dans l'algorithme du procédé selon l'invention. La contrainte calculée en trame 19 ne sera pas prise en compte car la contrainte calculée à la trame 18 a déjà été envoyée. En revanche, le nombre de voisins calculés en trame 19 est pris en compte dans le calcul du voisinage des trames suivantes grâce au lissage de l'estimation. Ainsi il n'y a pas de perte d'informations liée à la transmission d'une contrainte dans une trame. Dans cet exemple, un lissage de l'estimation et une utilisation de l'ensemble des trames pour l'estimation sont mis en oeuvre par l'algorithme, l'estimation du nombre de voisins par un noeud est ainsi améliorée.

A cause des collisions, un noeud ne reçoit pas forcément la contrainte maximale à laquelle il doit se soumettre ce qui peut entraîner une forte variation du nombre de voisins estimé.

Dans une première solution, un noeud envoie la contrainte qu'il impose à ses voisins ainsi que la contrainte à laquelle il se soumet lui-même, de telle sorte que ses voisins peuvent savoir si leur contrainte a été reçue.

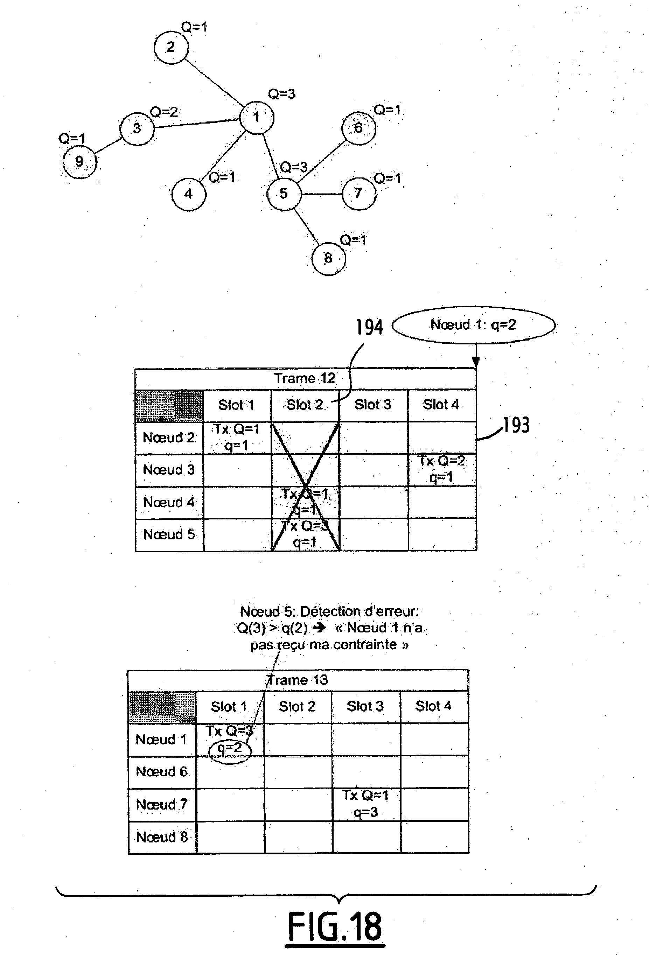

Sur la figure 18, un réseau ad hoc est composé de neuf noeuds numérotés de 1 à 9. On suppose que les noeuds émettent des messages dans des trames comportant quatre créneaux temporels indiqués « slot » sur la figure. Au cours d'une trame 11, on suppose que tous les noeuds se soumettent à une contrainte q = 1. A la fin de la trame 11, chaque noeud du réseau calcule la contrainte Q, qu'il va imposer à ses voisins. Ces contraintes sont émises en trame 12 et représentées sur la figure 18. Elles seront utilisées à partir de la trame 13. Un tableau 193 représente les messages reçus par le noeud 1 au cours de la trame 12. Dans les messages envoyés par un noeud, q désigne la contrainte à laquelle il se soumet et Q la contrainte qu'il impose à ses voisins. Au cours du créneau temporel 194, il y a collision entre les messages envoyés par les noeuds 4 et 5. Le noeud 1 se soumet donc à la contrainte maximale qu'il reçoit, c'est-à-dire Q=2, émise par le noeud 3. Au cours de la trame 13, on s'intéresse aux messages reçus par le noeud 5, noeud ayant émis la plus forte contrainte au cours de la trame précédente. Le noeud 1 transmet à la fois la contrainte qu'il impose à ses voisins et la contrainte à laquelle il se soumet. Ainsi, le noeud 5 sait que le noeud 1 se soumet à une contrainte plus faible que celle qu'il a imposée. Le noeud 5 est donc capable de détecter l'erreur. Cette solution présente l'avantage qu'un noeud peut savoir dans certains cas que son estimation de voisins sera mauvaise et ne mettra alors pas à jour cette estimation.

Dans une deuxième solution, un noeud connaît l'identité de l'émetteur du message qu'il reçoit.

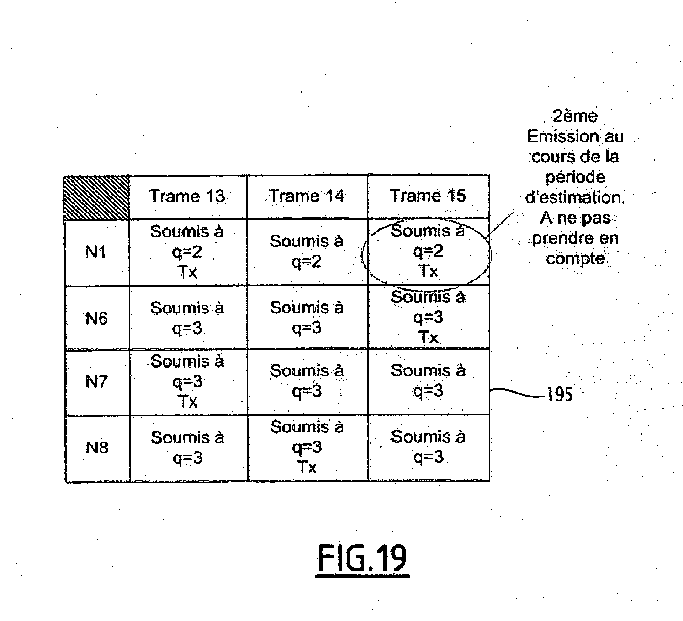

Sur la figure 19 le même réseau ad hoc que celui de la figure 18 est considéré. La même collision au cours de la trame 12 a lieu. Le noeud 1 se soumet donc à une contrainte q=2. Le noeud 5 ayant envoyé la contrainte Q=3 en trame 12, estime son voisinage sur les trames 13 à 15. Le tableau 195 représente les messages reçus par le noeud 5 au cours de ces trois trames 13, 14 et 15. En trame 15, le noeud 1 émet un second message dans la période d'estimation du voisinage du noeud 5. Par comparaison des identifiants des noeuds émetteurs, le noeud 5 détecte ce double envoi et n'en tient pas compte.

Cette solution présente l'avantage qu'un noeud est capable dans certains cas de détecter si un noeud voisin transmet plus d'un message au cours d'une période d'estimation, et de ne compter alors qu'une seule fois ce noeud voisin. Contrairement à la première solution qui ne permet que la détection d'une erreur, cette solution permet, si l'erreur est détectée, de la corriger. En revanche la première solution présente l'avantage de détecter l'erreur à partir du moment où un des messages du noeud s'étant trompé est reçu correctement alors que la deuxième solution ne peut détecter l'erreur que si les deux messages du noeud s'étant trompés sont reçus correctement. Il est possible d'implémenter dans l'algorithme du procédé selon l'invention l'une ou l'autre de ces solutions ou bien de combiner les deux afin de bénéficier à la fois d'un maximum d'erreurs détectées et de la possibilité d'en corriger certaines.

Le procédé selon l'invention permet ainsi de réduire le nombre de collisions sans ajuster la taille des trames, il est en effet utilisable avec une trame de taille fixe. Le procédé ne nécessite pas non plus l'envoi de messages supplémentaires de signalisation par exemple des messages balises. Seuls deux champs supplémentaires sont ajoutés aux messages transmis par les noeuds.

## Revendications

1. Procédé de transmission d'informations dans un réseau ad hoc comprenant au moins deux noeuds émetteurs-récepteurs propres à recevoir et émettre des informations et communiquant entre eux par l'envoi d'informations dans des créneaux temporels en accès aléatoire organisés en trames,
dans lequel les noeuds du réseau sont répartis en groupes selon une règle de répartition, les noeuds de chaque groupe n'ayant le droit d'émettre des informations que dans un sous ensemble de trames prédéfini propre au groupe, **caractérisé en ce que** la règle de répartition d'un noeud dans un groupe tient compte du nombre de noeuds émetteurs voisins ou interférents que les noeuds voisins du noeud considéré ont, et **en ce que** :

- chaque noeud définit (phase 24) une contrainte *neighborConstraint* pour les noeuds voisins,
- chaque noeud transmet (phase 24) la contrainte définie *neighborConstraint* aux noeuds voisins, et
- chaque noeud (phase 26) définit le groupe auquel il appartient selon la règle de répartition en fonction des contraintes *neighborConstraint* reçues des noeuds voisins,

l'étape de définition d'une contrainte *neighborConstraint* par un noeud pour les noeuds voisins comprenant une étape (56) d'estimation du nombre total de noeuds émetteurs voisins ou interférents et une étape (58) d'établissement de la contrainte *neighborConstraint* en fonction du nombre total de noeuds voisins ou interférents estimé et d'une probabilité $p_{Seuil}$ minimale cible que les voisins du noeud puissent émettre des informations sans collision.

2. Procédé selon la revendication 1, dans lequel le noeud définit (phase 26) le groupe auquel il appartient selon la règle de répartition en fonction de la contrainte *neighborConstraint* reçue des noeuds voisins conduisant à la plus faible fréquence d'émission.

3. Procédé selon la revendication 2, dans lequel l'étape de définition d'une contrainte *neighborConstraint* par un noeud pour les noeuds voisins comporte en outre une étape (50) d'estimation du nombre de noeuds voisins et interférents qui émettent pour une trame donnée, et une étape (58) de lissage du nombre total de noeuds émetteurs voisins ou interférents, la contrainte *neighborConstraint* étant fonction du nombre total de noeuds voisins ou interférents lissé et de la probabilité $p_{Seuil}$ minimale cible que les voisins du noeud puissent émettre des informations sans collision.

4. Procédé selon la revendication 3, dans lequel l'étape (50) d'estimation du nombre de noeuds voisins ou interférents qui émettent pour une trame donnée se base sur une mesure du nombre de créneaux temporels sur lesquels : aucune transmission n'a été détectée, une transmission unique a été reçue et, plus de deux transmissions générant une collision ont été détectées.

5. Procédé selon la revendication 2 ou 3, dans lequel l'étape (56) d'estimation du nombre total de noeuds émetteurs voisins ou interférents comporte une sommation (56) du nombre de noeuds voisins ou interférents ayant émis des messages dans chacune des trames correspondant à l'ensemble des groupes de répartition des noeuds suivant la contrainte *neighborConstraint* définie par le noeud et transmise à ses noeuds voisins.

6. Procédé selon la revendication 5, dans lequel l'étape de calcul du nombre total de noeuds émetteurs voisins ou interférents par un noeud comporte une pondération (58) du nombre de noeuds total de noeuds émetteurs ou interférents courant calculé, par le nombre total de noeuds émetteurs voisins ou interférents calculé précédemment pour ce noeud.

7. Procédé selon l'une quelconque des revendications précédentes, dans lequel chaque noeud définit le groupe auquel il appartient selon la règle de répartition en se soumettant à une contrainte *ownConstraint* parmi les contraintes des noeuds voisins *neighborConstraint* et dans lequel le calcul d'une contrainte *ownConstraint* propre à un noeud n'est réalisé que si au moins l'une des trois conditions suivantes est réalisée :

   - il n'y a pas de contraintes *neighborConstraint* plus élevées reçues d'un noeud voisin (69),
   - le noeud voisin ayant défini la contrainte *ownConstraint à* laquelle le noeud considéré se soumet, a transmis une contrainte moins élevée (72),
   - l'expiration d'une période de temps prédéterminée (*TimeToLive, 74).*

8. Procédé selon l'une quelconque des revendications précédentes, dans lequel chaque noeud définit le groupe auquel il appartient selon la règle de répartition en se soumettant à une contrainte *ownConstraint* parmi les contraintes des noeuds voisins *neighborConstraint* et dans lequel chaque noeud transmet (phase 24) la contrainte *ownConstraint à* laquelle il se soumet *msgConstraint.*

9. Procédé selon la revendication 8, **caractérisé en ce qu'**un noeud ayant émis une contrainte *neighborConstrainf* à une trame précédente détermine si la contrainte à laquelle un noeud voisin se soumet *ownConstraint* et qu'il a reçue de ce noeud voisin, est inférieure ou non à la contrainte *neighborConstraint* qu'il a émise et si la contrainte *ownConstraint* à laquelle le noeud voisin se soumet est inférieure à la contrainte *neighborConstraint* qu'il a émise, alors le noeud ne prend pas en compte les éléments d'estimation de son voisinage calculés lors de la trame courante.

10. Procédé selon la revendication 8 ou 9, **caractérisé en ce qu'**un noeud imposant à ses voisins une contrainte *neighborConstraint* détermine si un même noeud voisin émet au moins deux fois lors de n trames successives, n étant la contrainte *neighborConstraint* imposée au noeud, et si le noeud voisin émet au moins deux fois lors de n trames successives, le noeud ne prend en compte qu'une seule fois le noeud voisin pour la définition de son nombre de noeuds émetteurs voisins ou interférents.

11. Procédé selon l'une quelconque des revendications précédentes, **caractérisé en ce que** les transmissions entre les noeuds sont dépourvues de messages dédiés à la signalisation pour réduire le nombre de collision dans le réseau.

12. Réseau ad hoc comportant un ensemble de noeuds émetteurs-récepteurs propres à recevoir et émettre des informations et communiquant entre eux par l'envoi d'informations dans des créneaux temporels en accès aléatoire organisés en trames, **caractérisé en ce que** chaque noeud comporte des moyens pour la mise en oeuvre du procédé selon l'une quelconque des revendications précédentes.

**Patentansprüche**

1. Verfahren zum Übertragen von Informationen in einem Ad-hoc-Netzwerk, das mindestens zwei Sender-/Empfängerknoten umfasst, die geeignet sind, Informationen zu empfangen und zu senden, und die miteinander durch Verschicken von Informationen in Zufallszugriffszeitintervallen kommunizieren, die in Rahmen organisiert sind,

wobei die Knoten des Netzwerks nach einer Verteilungsregel in Gruppen aufgeteilt werden, wobei die Knoten jeder Gruppe nur dazu berechtigt sind, Informationen in einer der Gruppe eigenen, vordefinierten Rahmenuntereinheit zu senden,

**dadurch gekennzeichnet, dass** die Verteilungsregel für einen Knoten in einer Gruppe die Anzahl von benachbarten oder interferierenden Sendeknoten berücksichtigt, die die Nachbarknoten des betreffenden Knoten haben, und dass:

- jeder Knoten eine Einschränkung *neighborConstraintfür* die Nachbarknoten definiert (Phase 24),
- jeder Knoten die definierte Einschränkung *neighborConstraint* an die Nachbarknoten überträgt (Phase 24), und
- jeder Knoten (Phase 26) die Gruppe definiert, zu der er nach der Verteilungsregel gehört, in Abhängigkeit von den von den Nachbarknoten empfangenen Einschränkungen *neighborConstraint,*

wobei der Schritt der Definition einer Einschränkung *neighborConstraint* durch einen Knoten für die Nachbarknoten einen Schritt (56) zur Schätzung der Gesamtanzahl von benachbarten oder interferierenden Sendeknoten und einen Schritt (58) zur Aufstellung der Einschränkung *neighborConstraint* in Abhängigkeit von der geschätzten Gesamtanzahl von benachbarten oder interferierenden Knoten und einer Mindestzielwahrscheinlichkeit $P_{Seuil}$, dass die Nachbarn des Knotens die Informationen ohne Kollision senden können, umfasst.

2. Verfahren nach Anspruch 1, wobei der Knoten die Gruppe, zu der er nach der Verteilungsregel gehört, in Abhängigkeit von der von den Nachbarknoten empfangenen Einschränkung *neighborConstraint* definiert (Phase 26), die zur geringsten Sendefrequenz führt.

3. Verfahren nach Anspruch 2, wobei der Schritt zur Definition einer Einschränkung *neighborConstraint* durch einen Knoten für die Nachbarknoten darüber hinaus einen Schritt (50) zur Schätzung der Anzahl von benachbarten und interferierenden Knoten, die für einen gegebenen Rahmen senden, und einen Schritt (58) zur Glättung der Gesamtanzahl von benachbarten oder interferierenden Sendeknoten umfasst, wobei die Einschränkung *neighborConstraint* von der geglätteten Gesamtanzahl von benachbarten oder interferierenden Knoten und der Mindestzielwahrscheinlichkeit $P_{Seuil}$ abhängt, dass die Nachbarn des Knotens die Informationen ohne Kollision senden können.

4. Verfahren nach Anspruch 3, wobei der Schritt (50) zur Schätzung der Anzahl von benachbarten oder interferierenden Knoten, die für einen gegebenen Rahmen senden, auf einer Messung der Anzahl von Zeitschintervallen beruht, in denen: keine Übertragung detektiert wurde, eine einzige Übertragung empfangen wurde, mehr als zwei Übertragungen detektiert wurden, die eine Kollision erzeugen.

5. Verfahren nach Anspruch 2 oder 3, wobei der Schritt (56) zur Schätzung der Gesamtanzahl von benachbarten oder interferierenden Sendeknoten eine Summierung (56) der Anzahl von benachbarten oder interferierenden Knoten umfasst, die Nachrichten in jedem der Rahmen gesendet haben, die der Einheit der Verteilungsgruppen der Knoten nach der durch den Knoten definierten und an seine Nachbarknoten übertragenen Einschränkung *neighborConstraint* entsprechen.

6. Verfahren nach Anspruch 5, wobei der Schritt zur Berechnung der Gesamtanzahl von benachbarten oder interferierenden Sendeknoten durch einen Knoten eine Gewichtung (58) der aktuellen Gesamtknotenanzahl von sendenden oder interferierenden Knoten umfasst, die durch die Gesamtanzahl von benachbarten oder interferierenden Sendeknoten berechnet wird, die zuvor für diesen Knoten berechnet wurde.

7. Verfahren nach einem der vorhergehenden Ansprüche, wobei jeder Knoten die Gruppe, zu der er nach der Verteilungsregel gehört, dadurch definiert, dass er sich einer Einschränkung *ownConstraint* unter den Einschränkungen der Nachbarknoten *neighborConstraint* unterwirft, und wobei die Berechnung einer Einschränkung *ownConstraint,* die einem Knoten eigen ist, nur erfolgt, wenn mindestens eine der drei folgenden Bedingungen erfüllt ist:

- es gibt keine stringenteren Einschränkungen *neighborConstraint,* die von einem Nachbarknoten empfangen wurden (69),
- der Nachbarknoten, der die Einschränkung *ownConstraint* definiert hat, der sich der betreffende Knoten unterwirft, hat eine weniger stringente Einschränkung übertragen (72),
- der Ablauf eines vorbestimmten Zeitraums (TimeToLive, 74).

8. Verfahren nach einem der vorhergehenden Ansprüche, wobei jeder Knoten die Gruppe, zu der er nach der Verteilungsregel gehört, dadurch definiert, dass er sich einer Einschränkung *ownConstraint* unter den Einschränkungen *neighborConstraint* der Nachbarknoten unterwirft, und wobei jeder Knoten die Einschränkung *ownConstraint* über-

*trägt (Phase 24),* der er sich unterwirft *msgConstraint.*

9. Verfahren nach Anspruch 8, **dadurch gekennzeichnet, dass** ein Knoten, der eine Einschränkung *neighborConstraint* in einem vorhergehenden Rahmen gesendet hat, bestimmt, ob die Einschränkung *ownConstraint,* der sich ein Nachbarknoten unterwirft, und die er von diesem Nachbarknoten erhalten hat, weniger stringent ist als die Einschränkung *neighborConstraint,* die er gesendet hat, oder nicht, und wenn die Einschränkung *ownConstraint,* der sich der Nachbarknoten unterwirft, weniger stringent ist als die Einschränkung *neighborConstraint,* die er gesendet hat, dann berücksichtigt der Knoten die während des aktuellen Rahmens berechneten Schätzelemente seiner Nachbarschaft nicht.

10. Verfahren nach Anspruch 8 oder 9, **dadurch gekennzeichnet, dass** ein Knoten, der seinen Nachbarn eine Einschränkung *neighborConstraint* auferlegt, bestimmt, ob ein und derselbe Nachbarknoten mindestens zweimal während n aufeinanderfolgenden Rahmen sendet, wobei n die dem Knoten auferlegte Einschränkung *neighbor-Constraint* ist, und wenn der Nachbarknoten mindestens zweimal während n aufeinanderfolgenden Rahmen sendet, der Knoten den Nachbarknoten für die Definition seiner Anzahl von benachbarten oder interferierenden Sendeknoten nur einmal berücksichtigt.

11. Verfahren nach einem der vorhergehenden Ansprüche, **dadurch gekennzeichnet, dass** die Übertragungen zwischen den Knoten frei von Nachrichten sind, die zur Signalisierung bestimmt sind, um die Anzahl von Kollisionen im Netzwerk zu reduzieren.

12. Ad-hoc-Netzwerk, das eine Gruppe von Sender-/Empfängerknoten umfasst, die geeignet sind, Informationen zu empfangen und zu senden, und die miteinander durch Verschicken von Informationen in Zufallszugriffszeitintervallen kommunizieren, die in Rahmen organisiert sind, **dadurch gekennzeichnet, dass** jeder Knoten Mittel zum Umsetzen des Verfahrens nach einem der vorhergehenden Ansprüche umfasst.

## Claims

1. Method for transmitting information in an ad hoc network comprising at least two transmitter / receiver nodes able to receive and transmit information and communicating with each other by sending information in random access time slots organized in frames,
   wherein the nodes of the network are broken down into groups according to a distribution rule, the nodes of each group only having the right to transmit information in a predefined subset of frames specific to the group,
   **characterized in that**:

   - each node defines (phase 24) a constraint, *neighborConstraint,* for the neighboring nodes, and
   - each node transmits (phase 24) the defined constraint, *neighborConstraint,* to the neighboring nodes, and
   - each node (phase 26) defines the group to which it belongs according to the distribution rule according to the constraints, *neighborConstraint,* received from the neighboring nodes,

   the step for defining a constraint, *neighborConstraint,* by a node for the neighboring nodes includes a step (56) for estimating the total number of neighboring or interfering transmitting nodes and a step (58) for smoothing the total number of neighboring or interfering transmitting nodes, and a fourth step (58) for establishing the constraint, *neighborConstraint,* as a function of the total number of neighboring or interfering transmitting nodes and a target minimum probability ($p_{Seuil}$) that the neighbors of the node can transmit information without collisions.

2. Method according to claim 1, wherein the node defines (phase 26) the group to which it belongs according to the distribution rule according to the constraint, *neighborConstraint,* received from the neighboring nodes leading to the lowest transmission frequency.

3. Method according to claim 2, wherein the step for defining a constraint, *neighborConstraint,* by a node for the neighboring nodes includes a step (50) for estimating the number of neighboring or interfering transmitting nodes that transmit for a given frame, and a step (58) for smoothing the total number neighboring or interfering transmitting nodes, the constraint, *neighborConstraint,* being a function of the smoothed total number of neighboring or interfering transmitting nodes and the target minimum probability ($p_{Seuil}$) that the neighbors of the node can transmit information without collisions

4. Method according to claim 3, wherein the step (50) for estimating the number of neighboring or interfering transmitting nodes that transmit for a given frame is based on measuring the number of time slots on which: no transmission has been detected, a single transmission has been received, and more than two transmissions generating a collision have been detected.

5. Method according to claim 2 or 3, wherein the step (56) for estimating the total number of neighboring or interfering transmitting nodes includes a summation (56) of the number of neighboring or interfering nodes having transmitted messages in each of the frames corresponding to the set of distribution groups of the nodes according to the constraint, *neighborConstraint,* defined by the node and transmitted to its neighboring nodes

6. Method according to claim 5, wherein the step for calculating the total number of neighboring or interfering transmitting nodes by a node includes a weighting (58) of the calculated total number of current transmitting or interfering nodes, by the total number of neighboring or interfering transmitting nodes previously calculated for that node.

7. Method according to any one of the preceding claims, wherein each node defines the group to which it belongs according to the distribution rule by subjecting itself to a constraint, *ownConstraint,* among the constraints of the neighboring nodes, *neighborConstraint,* and in which the calculation of a constraint, *ownConstraint,* specific to a node is only done if at least one of the following three conditions is met:

   - there are no higher constraints, *neighborConstraint,* received from a neighboring node (69),
   - the neighboring node having defined the constraint, *ownConstraint,* to which the considered node subjects itself has transmitted a lower constraint (72),
   - the expiration of a predetermined period of time (*TimeToLive,* 74).

8. Method according to any one of the preceding claims, wherein each node defines the group to which it belongs according to the distribution rule by subjecting itself to a constraint, *ownConstraint,* among the constraints of the neighboring nodes, *neighborConstraint,* and in which each node transmits (step 24) the constraint, *ownConstraint,* to which it subjects itself, *msgConstraint.*

9. Method according to claim 8, **characterized in that** a node having transmitted a constraint, *neighborConstraint,* to a preceding frame determines whether the constraint to which a neighboring node subjects itself, *ownConstraint,* and that it has received from that neighboring node, is below the constraint, *neighborConstraint,* that it transmitted and whether the constraint, *ownConstraint,* to which the neighboring node subjects itself is below the constraint, *neighborConstraint,* that it has transmitted, then the node does not take into account the estimating elements of its neighborhood calculated during the current frame.

10. Method according to claim 8 or 9, **characterized in that** a node imposing a constraint, *neighborConstraint,* on its neighbors determines whether a same neighboring node transmits at least twice during n consecutive frames, n being the constraint, *neighborConstraint,* imposed on the node, and if the neighboring node transmits at least twice during n consecutive frames, the node only takes the neighboring node into account a single time to define its number of neighboring or interfering transmitting nodes.

11. Method according to any one of the preceding claims, **characterized in that** the transmissions between the nodes lack messages dedicated to the signaling to reduce the number of collisions in the network.

12. Ad hoc network including a set of transceiver nodes able to receive and transmit information and communicating with each other by sending information in frames, **characterized in that** each node includes means for implementing the method according to any one of the preceding claims.

Collisions

FIG.1

# FIG.2 (début)

# FIG.2 (fin)

**52** Est-ce le moment d'estimer le nbre de voisins total ?

NON

OUI

**53** Droit d'émettre à la prochaine trame ?

OUI

NON

**54** Choix du créneau temporel pour émettre neighborConstraint

**56** nbNeighborMeasurement = sum(nbNeighborPerFrame)

**58** Lissage de l'estimation calcul de neighborConstraint

**60** Droit d'émettre à la prochaine trame ?

NON

OUI

**68** Détermination de la trame où se fera le prochain calcul de neighborConstraint

**64** La trame où se fera le prochain calcul de neighborConstraint devient frameNumber+1

**66** Choix du créneau temporel pour émettre neighborConstraint

**26**

Mise à jour de ownConstraint

**69** ownConstraintTemp >ownConstraint ?

OUI

NON

**72** changeConstraint vrai ?

OUI

NON

**74** timeToLive = 0 ?

OUI

NON

**70** ownConstraint = ownConstraintTemp nodeToWait = nodeToWaitTemp réinitialisation de timeTolive

**76** timeToLive-1

EP 2 440 001 B1

Table 90 (Fig. 3):

| | Slot 1 (92) | Slot 2 (94) | Slot 3 (96) | Slot 4 (98) |
|---|---|---|---|---|
| Nœud 1 | Emission | | | |
| Nœud 2 | | Emission | | |
| Nœud 3 | | Emission | | |
| Nœud 4 | | | | Emission |
| Nœud 5 | | | Emission | |
| Nœud 6 | | | | Emission |
| Nœud 7 | | | | Emission |

Collision ↑ (Slot 2)   Collision ↑ (Slot 4)

90

## FIG.3

Table 100 (Fig. 4):

| | Slot 1 (101) | Slot 2 (102) | Slot 3 (103) | Slot 4 (104) | Slot 5 (105) |
|---|---|---|---|---|---|
| Nœud 1 | Emission | | | | |
| Nœud 2 | | Emission _106 | | | |
| Nœud 3 | | Emission _107 | | | |
| Nœud 4 | | | | Emission | |
| Nœud 5 | | | Emission | | |
| Nœud 6 | | | | | Emission _108 |
| Nœud 7 | | | | | Emission _109 |

7 Nœuds / 5 Slots
7/5=1.4
k=2

## FIG.4

17

| | Slot 1 (121) | Slot 2 (122) | Slot 3 (123) | Slot 4 (124) |
|---|---|---|---|---|
| Nœud 1 | Emission | | | |
| Nœud 2 | | Emission | _125 | |
| Nœud 3 | | Emission | _126 | |
| Nœud 4 | | | | Emission _127 |
| Nœud 5 | | | Emission | |
| Nœud 6 | | | | Emission _128 |
| Nœud 7 | | | | Emission _129 |

_120

7 Nœuds / 4 Slots
7/4 = 1.75
k=2.5

## FIG.5

| | Slot 1 (141) | Slot 2 (142) | Slot 3 (143) | Slot 4 (144) | Slot 5 (145) |
|---|---|---|---|---|---|
| Nœud 1 | Emission | | | | |
| Nœud 2 | | Emission | _146 | | |
| Nœud 3 | | Emission | _147 | | |
| Nœud 4 | | | | Emission | |
| Nœud 5 | | | Emission | | |
| Nœud 6 | | | | | Emission _148 |
| Nœud 7 | | | | | Emission _149 |
| Nœud 8 | | | Emission | | |
| Nœud 9 | | Emission | | | |
| Nœud10 | | | | | Emission _150 |

_140

10 Nœuds / 5 Slots
10/5 = 2
k=2.6

## FIG.6

|  | Slot 1 | Slot 2 | Slot 3 | Slot 4 |
|---|---|---|---|---|
| Nœud 1 | Emission |  |  |  |
| Nœud 2 |  | Emission |  |  |
| Nœud 3 |  | Emission |  |  |
| Nœud 4 |  |  |  | Emission |
| Nœud 5 |  |  | Emission |  |
| Nœud 6 |  |  |  | Emission |
| Nœud 7 |  |  |  | Emission |

161 162 163 164

160

Collision          Collision

## FIG.7

EP 2 440 001 B1

# Trame 1

| | Slot 1 | Slot 2 | Slot 3 | Slot 4 | 170 |
|---|---|---|---|---|---|
| Nœud 1 | Emission | | | | |
| Nœud 2 | | | | | |
| Nœud 3 | | | | | |
| Nœud 4 | | | | Emission | |
| Nœud 5 | | | | | |
| Nœud 6 | | | | | |
| Nœud 7 | | | | Emission | |

Collision

## FIG.8

EP 2 440 001 B1

# Trame 2

| | Slot 1 | Slot 2 | Slot 3 | Slot 4 | 180 |
|---|---|---|---|---|---|
| Nœud 1 | | | | | |
| Nœud 2 | | Emission | | | |
| Nœud 3 | | | | | |
| Nœud 4 | | | | | |
| Nœud 5 | | | Emission | | |
| Nœud 6 | | | | | |
| Nœud 7 | | | | | |

## FIG.9

EP 2 440 001 B1

# Trame 3

| | Slot 1 | Slot 2 | Slot 3 | Slot 4 |
|---|---|---|---|---|
| Nœud 1 | | | | |
| Nœud 2 | | | | |
| Nœud 3 | | Emission | | |
| Nœud 4 | | | | |
| Nœud 5 | | | | |
| Nœud 6 | | | | Emission |
| Nœud 7 | | | | |

190

## FIG.10

EP 2 440 001 B1

| | Slot 1 | Slot 2 | Slot 3 | Slot 4 |
|---|---|---|---|---|
| Nœud 2 | | Q=2 | | |
| Nœud 3 | | | Q=4 | |

191

# FIG.11

| | Trame 15 | Trame 16 | Trame 17 | Trame 18 | Trame 19 | Trame 20 | Trame 21 |
|------|----------|----------|----------|----------|----------|----------|----------|
| N2 | | Q=2 | | Q=2 | | Q=2 | |
| N3 | Q=4 | | | Q=4 | | | Q=4 |

192

## FIG.12

Utilisation de la contrainte Q

Emission de la contrainte Q

| Trame t-1 | Trame t | Trame t+1 | Trame t+2 |

Calcul de la contrainte Q

Réception de la contrainte Q

## FIG.13

Réception de la
contrainte 3

Utilisation de la
contrainte 3

Utilisation de la
contrainte 3

Utilisation de la
contrainte 3

| Trame t-1 | Trame t | Trame t+1 | Trame t+2 | Trame t+3 | Trame t+4 | Trame t+5 |

Calcul de la
contrainte 3

Emission de la
contrainte 3

Estimation
voisinage

Estimation
voisinage

Estimation
Voisinage
+
Calcul de la
contrainte Q

## FIG.14

Réception de la
contrainte 3

Utilisation de la
contrainte 3

Utilisation de la
contrainte 3

Utilisation de la
contrainte 3

| Trame 10 | Trame 11 | Trame 12 | Trame 13 | Trame 14 | Trame 15 |

Calcul de la
contrainte 3

Report
d'émission

Emission de la
contrainte 3

Estimation
voisinage

Estimation
voisinage

Estimation
Voisinage
+
Calcul de la
contrainte Q

## FIG.15

200

|  | Trame 14 | Trame 15 | Trame 16 | Trame 17 | Trame 18 | Trame 19 | Trame 20 | Trame 21 | Trame 22 |
|---|---|---|---|---|---|---|---|---|---|
| N1 Q=2 q=4 | E | E V(1) | E V'(1) | Tx | E | E V(1) | E V'(1) | Tx | E |
| N3 Q=4 q=3 | V'(3) | Tx | E | E | E | E V(3) | E V'(3) | Tx | E |
| N7 Q=3 q=4 | E V(7) | Tx | E | E | E V(7) | Tx | E | E | E V(7) |

| E | Estimation |

| E V(x) | Estimation + Calcul du voisinage du nœud x |

| Tx | Transmission d'une nouvelle contrainte (après mise à jour) |

## FIG.16

FIG.17

Nœud 1: q=2

194

### Trame 12

| | Slot 1 | Slot 2 | Slot 3 | Slot 4 |
|---|---|---|---|---|
| Nœud 2 | Tx Q=1 q=1 | | | |
| Nœud 3 | | | | Tx Q=2 q=1 |
| Nœud 4 | | Tx Q=1 q=1 | | |
| Nœud 5 | | Tx Q=3 q=1 | | |

193

Nœud 5: Détection d'erreur:
Q(3) > q(2) → « Nœud 1 n'a
pas reçu ma contrainte »

### Trame 13

| | Slot 1 | Slot 2 | Slot 3 | Slot 4 |
|---|---|---|---|---|
| Nœud 1 | Tx Q=3 q=2 | | | |
| Nœud 6 | | | | |
| Nœud 7 | | | Tx Q=1 q=3 | |
| Nœud 8 | | | | |

# FIG.18

|  | Trame 13 | Trame 14 | Trame 15 |
|---|---|---|---|
| N1 | Soumis à q=2 Tx | Soumis à q=2 | Soumis à q=2 Tx |
| N6 | Soumis à q=3 | Soumis à q=3 | Soumis à q=3 Tx |
| N7 | Soumis à q=3 Tx | Soumis à q=3 | Soumis à q=3 |
| N8 | Soumis à q=3 | Soumis à q=3 Tx | Soumis à q=3 |

2ème Emission au cours de la période d'estimation. A ne pas prendre en compte

195

# FIG.19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- IEEE Standard for Information technology Télécommunications and information exchange between systems Local and metropolitan area networks. *Wireless LAN Médium Access Control (MAC) and Physical Layer (PHY) Spécifications,* 2007

- **KOUBÂA.** Improving Quality-of-Service in Wireless Sensor Networks by Mitigating 'Hidden-Node Collision. *IEEE,* 2009